# EUROPÄISCHE PATENTSCHRIFT

(11) **EP 0 463 404 B1**
(45) Veröffentlichungstag und Bekanntmachung des Hinweises auf die Patenterteilung: **11.01.1995**
(21) Anmeldenummer: 91109048.8
(22) Anmeldetag: 03.06.1991
(51) Int. Cl.: G02B 6/38

(54) **Lichtwellenleiter-Stecker**
Fiber-optic connector
Connecteur pour fibres optiques

(30) Priorität: 27.06.1990 DE 4020468
(43) Veröffentlichungstag der Anmeldung: 02.01.1992
(73) Patentinhaber: SIEMENS AKTIENGESELLSCHAFT, 80333 München (DE)
(72) Erfinder: Krausse, Peter, Dipl.-Ing., W-8011 Aschheim (DE)

(56) Entgegenhaltungen:
- EP-A- 0 345 519
- DE-A- 2 701 436
- DE-U- 8 908 913
- PATENT ABSTRACTS OF JAPAN Band 4,Nr.8(E-166),22 Januar 1980;JP-A-54148544

## Beschreibung

Die Erfindung bezieht sich auf einen Lichtwellenleiter-Stecker gemäß dem Oberbegriff des Anspruchs 1 Er beschreibt einen Stecker bei dem das Ende der Lichtwellenleiter-Faser in einer Kapillare eines Metallstiftes fixiert ist, dessen Frontseite plan mit der Lichtwellenleiter-Faser endet und bei dem der Metallstift in einem hülsenförmigen Steckergehäuse mittels einer Ringmutter und einem in einer Ringnut des Stiftes liegenden Klemmring befestigt ist und dieser Stecker in eine Zentrier- und Kupplungshülse einsteckbar ist, über die der Stecker auf ein Gegenstück zentriert wird und der Stecker mittels einer längeren Überwurfmutter mit der Zentrier- und Kupplungshülse verschraubbar ist und bei dem innerhalb des hinteren Teils der Überwurfmutter eine axial wirksame Druckfeder gelagert ist, die beim Verschrauben die Steckerhülse gegen die axial gleitbar darüber angeordnete Überwurfmutter verspannt und innerhalb der Überwurfmutter eine axial geschlitzte Hülse über der Steckerhülse angeordnet ist, die letzlich als Anschlag an die Zentrier- und Kupplungshülse dient.

Die Stirnflächen von Lichtwellenleiter-Fasern von Handsteckverbindungen nach DIN 47256 sollen deckungsgleich ohne Luftspalt aneinanderliegen, um eine dämpfungsarme Signalübertragung für das Licht zu gewährleisten. Dazu werden die Hartmetallstifte, in denen die Fasern gefaßt sind, in einer Zentrier- und Kupplungshülse axial zusammengedrückt.

Derartige Anordnungen sind beispielsweise durch die europäische Patentanmeldung 0 164 531 bekannt.

Die Lichtwellenleiter-Fasern sind jedoch bruchempfindlich, des weiteren steigt die Durchgangsdämpfung einer Steckverbindung ab einer gewissen Höhe der Stirnflächenkraft an, so daß hohe Anpreßdrücke zu vermeiden sind.

Gemäß DGM 89 08 913 werden daher die beiden zu kuppelnden Hartmetallstifte durch in den zugehörigen Überwurfmuttern befindliche axial wirksame Federn aufeinandergedruckt.

Der Erfindung liegt die Aufgabe zugrunde eine derartige Ausführung dahingehend zu verbessern, daß bei Zug an einem der LWL-Kabel nach der Montage ein Abheben der Stirnflächenverbindung unmöglich wird.

Diese Aufgabe wird bei einer Einrichtung der eingangs genannten Art erfindungsgemäß durch den Kennzeichnenden Teil des Anspruchs 1 gelöst. Die Lösung ist darin zu sehen, daß der Anschlag dieser Hülse an einen hierzu im hinteren Bereich der Überwurfmutter befindlichen inneren Kragen bei beiden Teilen als konische Auflauffläche derart ausgebildet ist, daß die geschlitzte Hülse gegen die axial festen Teile der Steckerhülse verspannt wird.

Nachstehend wird die Erfindung anhand eines in den Figuren dargestellten Ausführungsbeispiels näher erläutert.
- Die Figur 1: zeigt rechts den teilweise axial geschnittenen Stecker im entspannten Zustand der Feder (Ruhelage) und links eine Draufsicht von der Frontseite her.
- Die Figur 2: zeigt zwei solcher Stecker, die über ein Kupplungsstück miteinander verbunden sind. Der linke Teil zeigt dabei übereinander dargestellt zwei verschiedene Axialstellungen beim Anziehen der Überwurfmutter.

Ein Hartmetallstift 1, in dem eine Lichtwellenleiter-Faser befestigt ist, wird mit einer frontseitig nach Art einer Kronenmutter mit Nuten 2a versehenen Mutter 2 über einen Sprengring 3 auf einer Steckerhülse 4 befestigt. Über die Mutter 2 ist eine umfangsseitig geschlitzte Hülse 5 in die Ausnehmung 13 der Überwurfmutter 6 eingesprengt. Die Ausnehmung in der Innenkontur der Nut 13, dient als axialer Gleitraum für die Hülse 5. Die axiale Beweglichkeit der Überwurfmutter 6 auf der Hülse 5 ist so durch die Anlageflächen a und b begrenzt.

Im hinteren, ebenfalls nutenförmig ausgenommenen Raum 6a der Überwurfmutter 6 ist eine Druckfeder 7 gelagert, die sich rückseitig gegen einen in die Überwurfmutter eingepreßten Sprengring 8 abstützt. Das vorderseitige Ende der Feder stützt sich gegen einen dort vorgesehenen Kragen 2b der Überwurfmutter 2 ab.

Die vormontierten Teile 1, 2, 4 werden vor dem Einpressen des Sprengrings von hinten in die Überwurfmutter eingeschoben.

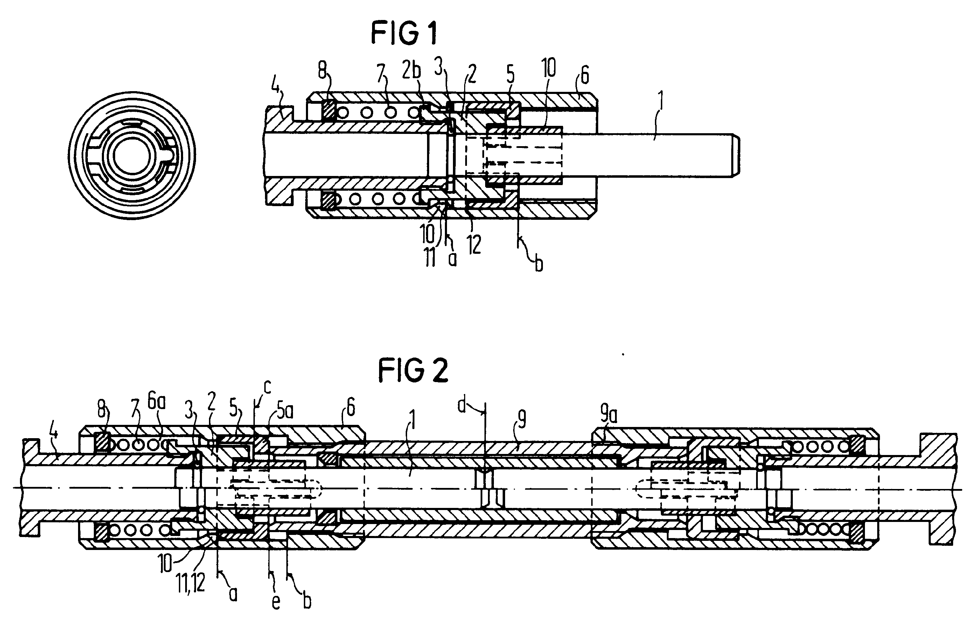

Im entspannten Zustand gleitet durch die Federvorspannung die axial bewegbare Hülse 5 gegen die vordere Nutbegrenzung von 13 mit der Fläche b. Beim Aufschrauben der Überwurfmutter 6 auf eine für diese Verbindungen übliche Zentrier- und Kupplungshülse 9 schlägt die Frontseite der geschlitzten Hülse 5 an der Frontseite der Kupplungshülse 9 bei e an. Die Hülse 5 wird dabei derart nach hinten geschoben, daß sie an die hintere Begrenzung ihres Gleitraumes 13 bei a zur Anlage kommt, wie in Figur 2 links, unterer Schnitt, angedeutet.

Diese Fläche bei a ist nun bei den Teilen 5 und 6 konisch gestaltet. Hierzu ist in Steckrichtung die vordere Anschlagkante des inneren Kragens 10 in der Überwurfmutter angefast (11). Entsprechend ist die hintere Kante der umfangsseitig geschlitzten Hülse 5 bearbeitet (12).

Durch die Fase (11) in der Überwurfmutter (6) und die Fase (12) in der geschlitzten Hülse (5), wird beim Verschrauben der Überwurfmutter (6) mit der Kupplungshülse (9) nach Anlage der geschlitzten Hülse (5) und der Kupplungshülse (9) an der Fläche (e) ein Klemmen des Innendurchmessers der geschlitzten Hülse (5) gegen den Außendurchmesser der mehrfach geschlitzten Mutter (2) wegen ihrer Federwirkung erreicht. Somit ist der mit der Steckerhülse (4) und der mehrfach geschlitzten Mutter (2) über den Sprengring (3) festverbundene Stift (1) gegen die Kupplungshülse (9) arretiert und es ist somit, auch bei Zug am, mit dem Stift (1) fest verbundenen LWL-Kabel, nicht mehr möglich den Stirnkontakt (d) zu lösen.

Diese Maßnahme kann natürlich auch beim Gegenstecker getroffen werden falls auch dort das entsprechende LWL-Kabel zuggefährdet ist.

Zweckmäßig wird die Steigung der koNischen Flächen 11 und 12 derart gewählt, daß ein Selbstklemmen beim Lösen der Überwurfmutter vermieden wird. Im Ausführungsbeispiel wurde der Anstiegswinkel gegenüber der Axialrichtung zu etwa 30° gewählt.

## Patentansprüche

1. Lichtwellenleiter-Stecker bei dem das Ende der Lichtwellenleiter-Faser in einer Kapillare eines Metallstiftes (1) fixiert ist, dessen Frontseite plan mit der Lichtwellenleiter-Faser endet und bei dem der Metallstift (1) in einem hülsenförmigen Steckergehäuse (4) mittels einer Ringmutter (2) und einem in einer Ringnut des Stiftes liegenden Klemmring (3) befestigt ist und dieser Stecker in eine Zentrier- und Kupplungshülse (9) einsteckbar ist, über die der Stecker auf ein Gegenstück eines anderen optischen Elements zentriert wird und das Steckergehäuse mittels einer längeren Überwurfmutter (6) mit der Zentrier- und Kupplungshülse (9) verschraubbar ist, und bei dem innerhalb des hinteren Teils der Überwurfmutter (6) eine axial wirksame Druckfeder (7) gelagert ist, die beim Verschrauben die Steckerhülse (4) gegen die axial gleitbar darüber angeordnete Überwurfmutter (6) verspannt wird und innerhalb der Überwurfmutter eine axial geschlitzte Hülse (5) über ein Teilstück der Steckerhülse derart angeordnet ist, daß beim Verschruben ein vorderer Anschlag der geschlitzten Hülse an die Zentrier- und Kupplungshülse anschlägt und ein hinterer Anschlag der Hülse an einem, im hinteren Bereich der Überwurfmutter (6) befindlichen inneren Kragen (10) anschlägt
**dadurch gekennzeichnet**, daß die Anschlagflächen am Kragen und im hinteren Bereich der geschlitzten Hülse als konische Auflauffläche derart ausgebildet sind, daß beim Verschrauben die geschlitzte Hülse (5) gegen die axial festen Teile (2) der Steckerhülse (4) verklemmt wird.

2. Lichtwellenleiter-Stecker nach Anspruch 1,
**dadurch gekennzeichnet**,
daß die Steigung der konischen Flächen (11/12) gegen die Axialrichtung derart gewählt ist, daß ein Selbstklemmen beim Lösen der Überwurfmutter vermieden wird und insbesondere etwa 30° beträgt.

## Claims

1. Optical waveguide connector in which the end of the optical waveguide fibre is fixed in a capillary of a metal pin (1), the front surface of which ends in planar fashion with the optical waveguide fibre and in which the metal pin (1) is secured in a sleeve-shaped connector housing (4) by means of a ring nut (2) and a locking ring (3) lying in an annular groove of the pin and this connector can be inserted into a centring and coupling sleeve (9), by means of which the connector is centred onto a counterpiece of another optical element and the connector housing can be screwed by means of a longer retaining nut (6) to the centring and coupling sleeve (9), and in which an axially acting compression spring (7) is mounted within the rear part of the retaining nut (6), which spring, in the course of screwing, braces the connector sleeve (4) against the retaining nut (6) axially slideably disposed thereabove, and an axially slotted sleeve (5) is disposed within the retaining nut by means of a partial piece of the connector sleeve, in such a manner that in the course of screwing a forward abutment of the slotted sleeve abuts against the centring and coupling sleeve and a rear abutment of the sleeve abuts against an inner collar (10) situated in the rear region of the retaining nut (6), characterized in that the abutment surfaces on the collar and in the rear region of the slotted sleeve are designed as a conical run-up surface in such a manner that in the course of screwing the slotted sleeve (5) is locked against the axially fixed parts (2) of the connector sleeve (4).

2. Optical waveguide connector according to Claim 1, characterized in that the gradient of the conical surfaces (11/12) in relation to the axial direction is selected in such a manner that a self-locking upon release of the retaining nut is avoided and amounts, especially, to approximately 30°.

## Revendications

1. Connecteur pour guide d'ondes lumineuses, dans lequel l'extrémité de la fibre formant guide d'ondes lumineuses est fixée dans un capillaire d'une tige métallique (1), dont la face frontale se termine de niveau avec la fibre du guide d'ondes lumineuses, et dans lequel la tige métallique (1) est fixée dans un boîtier (4) du connecteur en forme de douille, au moyen d'un écrou annulaire (2) et d'une bague de serrage (3) située dans une gorge annulaire de la tige, et ce connecteur peut être enfiché dans une douille de centrage et d'accouplement (9), au moyen de laquelle le connecteur est centré sur une partie antagoniste d'un autre élément optique, et le boîtier du connecteur peut être vissé, au moyen d'un écrou-raccord plus long (6) à la douille de centrage et d'accouplement (9), et dans lequel, à l'intérieur de la partie arrière de l'écrou-raccord (6) est monté un ressort de pression (7) qui agit axialement et qui, lors du vissage de la douille (4) du connecteur, est serré contre l'écrou-raccord (6) disposé par-dessus cette douille de manière à pouvoir glisser axialement, et une douille (5) fendue axialement est disposée à l'intérieur de l'écrou-raccord, par-dessus une partie de la douille de connecteur de telle sorte que, lors du vissage, une butée avant de la douille fendue s'applique contre la douille de centrage et d'accouplement et une butée arrière de la douille s'applique contre un collet intérieur (10) situé dans la partie arrière de l'écrou - raccord (6), caractérisé par le fait que les surfaces de butée sur le collet et dans la partie arrière de la douille fendue sont réalisées sous la forme d'une surface de montée conique de sorte que, lors du vissage, la douille fendue (5) est serrée contre les parties (2), qui sont fixes axialement, de la douille (4) du connecteur.

2. Connecteur pour guide d'ondes lumineuses suivant la revendication 1, caractérisé par le fait que l'inclinaison des surfaces coniques (11/12) par rapport à la direction axiale est choisie de manière à éviter un auto-blocage lors du desserrage de l'écrou-raccord et est égale notamment à environ 30°.
